# EUROPEAN PATENT SPECIFICATION

(11) **EP 3 544 266 B1**
(45) Date of publication and mention of the grant of the patent: **04.05.2022**
(21) Application number: 19162079.8
(22) Date of filing: 12.03.2019
(51) Int. Cl.: H04L 29/12

(54) **NETWORK BRIDGE AND NETWORK MANAGEMENT METHOD**
NETZWERKBRÜCKE UND NETZWERKVERWALTUNGSVERFAHREN
PONT DE RÉSEAU ET PROCÉDÉ DE GESTION DE RÉSEAU

(30) Priority: 19.03.2018 TW 107109350
(43) Date of publication of application: 25.09.2019
(73) Proprietor: Pegatron Corporation, Taipei City 112 (TW)
(72) Inventor: WU, Chih-Wei, 112 TAIPEI CITY (TW)
(74) Representative: Becker Kurig & Partner Patentanwälte mbB

(56) References cited:
- WO-A2-2006/072052
- US-A1- 2013 201 978
- CAI YONGSHUN CHINA TELECOM ET AL: "Output version of Y.CCInfra Cloud Computing Infrastructure Functional requirements;TD", ITU-T DRAFT ; STUDY PERIOD 2009-2012, INTERNATIONAL TELECOMMUNICATION UNION, GENEVA ; CH, vol. 27/13, 13 June 2012 (2012-06-13), pages 1-45, XP044024172, [retrieved on 2012-06-13]

## Description

### BACKGROUND

### Technical Field

The disclosure relates to a network management technology; more particularly, the disclosure relates to a network bridge and a network management method.

### Description of Related Art

With the development of network communication, a network bridge is often utilized to connect two or more networks of the same or different networks. Through the network bridge, data packets can be transmitted from one network to another. However, if a user terminal (e.g., a personal computer or a server) already has an Internet protocol (IP) address which belongs to a domain different from another domain to which the network bridge belongs, and if such a user intends to manage the settings of the network bridge, another IP address (e.g., a private IP address) needs be set, so that the user terminal and the network bridge can belong to the same domain for communication or operation. However, under certain circumstances, the user terminal may not be authorized to set up or change the IP address, or the user is required to do manual settings through performing complicated steps, which is inconvenient to the user.

US 2013/201978 A1 discloses a method and system for partitioning WLAN in order to separate network traffic from different WLANs. Specifically, a network device receives a packet from a client connected to a first network device on an access network. The network device then determines that the received packet is associated with a VLAN that is pre-configured on the first network device based on the access network to which the client is connected. Furthermore, the network device transmits the packet to a MAC layer switching device, which is not configured with the VLAN that is pre-configured on the network device. The packet includes one of a DHCP discovery message, an ARP request message, a unicast message, a multicast message, and a broadcast message. The unicast message will be transmitted to the second network device on the pre-configured VLAN prior to being transmitted to another network device outside the pre-configured VLAN.

WO 2006/072052 A2 discloses a system for protecting identify of network devices in a network environment. The system includes an apparatus having an interface to the network for completing connections to destination devices on the public side of the network. The apparatus includes a masking element for associating at least one masking identifier with a communication from the network device and masking the identifier of the network device from the destination device.

### SUMMARY

The present invention is provided by the appended claims. The following disclosure serves a better understanding of the present invention. Accordingly, the disclosure provides a network bridge and a network management method. The network bridge has a mechanism for determining a destination IP addresses of data packets coming from hosts in a different domain. The management of the network bridge can be achieved by replacing a source IP address of the data packet with a virtual IP address when the IP addresses of the host and the network bridge are in respective domains. The domain of virtual IP address is the same as the one of the network bridge. And the steps of controlling or setting the network bridge are simplified.

A network bridge provided in an embodiment of the disclosure includes: a first network interface, an IP address control unit, and an application unit. The first network interface is configured to receive a first packet sent from a first apparatus connected to a first network. The IP address control unit includes an address determination unit and an address replacement unit. The address determination unit is configured to determine whether an IP address of the network bridge is in a destination IP address field of the first packet, wherein a domain of the network is different from a domain of the network bridge.

The address replacement unit is configured to replace an IP address of the first apparatus in a source IP address field of the first packet with a virtual IP address when the IP address of the network bridge is in the destination IP address field of the first packet. The application unit is configured to receive the replaced first packet from the IP address control unit and execute an application program according to the data in the replaced first packet.

A network management method provided in an embodiment of the disclosure is suitable for a network bridge and includes: receiving a first packet sent from a first apparatus connected to a first network and determining whether an IP address of the network bridge is in a destination IP address field of the first packet, wherein a domain of the first network is different from a domain of the network bridge; when the IP address of the network bridge is in the destination IP address field of the first packet, replacing an IP address of the first apparatus in a source IP address field of the first packet with a virtual IP address and executing an application program according to the data in the replaced first packet.

In view of the above, in the network bridge and the network management method provided in an embodiment of the disclosure, the network bridge has a mechanism for determining the destination IP address of the data packet. As long as the network bridge determines the destination IP address and the IP address of the network bridge are the same, the source IP address of the data packet is replaced with the virtual IP address belonging to the domain to which the network bridge also belongs. Hence, even though the IP address of the first apparatus and the network bridge are in different domains, the first apparatus is able to directly communicate with the network bridge and further manage or operate the network bridge. As such, the network bridge and the network management method provided in one or more embodiments of the disclosure contribute to the simplification of the user's operation or the method of managing the network bridge in no need of additionally setting another IP address on the user terminal nor changing the IP address to communicate with the network bridge.

In order to make the aforementioned features and advantages of the disclosure more comprehensible, embodiments accompanied with figures are described in detail below.

### BRIEF DESCRIPTION OF THE DRAWINGS

The accompanying drawings are included to provide a further understanding of the application, and are incorporated in and constitute a part of this specification. The drawings illustrate embodiments of the application and, together with the description, serve to explain the principles of the application.
FIG. 1 is a schematic view of a network system according to an embodiment of the disclosure.
FIG. 2 is a schematic block view of a network bridge according to an embodiment of the disclosure.
FIG. 3 is a flow chart of a network management method according to an embodiment of the disclosure.

### DESCRIPTION OF THE EMBODIMENTS

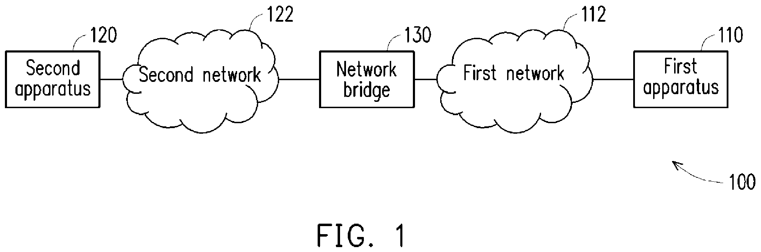

FIG. 1 is a schematic view of a network system according to an embodiment of the disclosure. With reference to FIG. 1, a network system 100 includes a first apparatus 110, a second apparatus 120, and a network bridge 130. The first apparatus 110 is coupled to a first network 112, the second apparatus 120 is coupled to a second network 122, and the network bridge 130 is coupled between the first network 112 and the second network 122, wherein a domain of the first network 112 is different from a domain of the network bridge 130. In other words, an IP address of the first apparatus 110 and an IP address of the network bridge 130 belong to different domain names. In addition, the first network 112 and the second network 122 may belong to the same domain or different domains, which should not be construed as a limitation in the disclosure.

The network bridge 130 is a network bridge which may integrate different transmission entities and allow connections under different network standards, including but not limited to, the connection between two Ethernet networks or the connection between an Ethernet network and a Token Ring. According to the present embodiment, the network bridge 130 forwards a data packet sent from the first apparatus 110 in the first network 112 to the second apparatus 120 in the second network 122.

According to the present embodiment, the network bridge 130 receives a first packet sent from the first apparatus 110 in the different domain and determines whether an IP address in a destination IP address field of the first packet is the same as the IP address of the network bridge 130. If the destination IP address of the first packet and the IP address of the network bridge 130 are the same, the IP address of the first apparatus 110 is replaced with a virtual IP address in a source IP address field of the first packet, so that the network bridge 130 would consider that the first packet is sent by a host in the same domain. Here, the virtual IP address and the IP address of the network bridge 130 belong to the same domain. If the destination IP address field of the first packet does not contain the IP address of the network bridge 130, but contains the IP address of the second apparatus 120, the network bridge 130 directly forwards the first packet to the second apparatus 120 located in the second network 122. Embodiments of the disclosure are described in detail hereinafter.

According to the present embodiment, the first apparatus 110 and the second apparatus 120 are physical hosts, such as a desktop computer, a notebook computer, a tablet PC, an ultra-mobile PC (UMPC), a personal digital assistant (PDA), a smart phone, a mobile phone, a PlayStation Portable (PSP), a work station, a server, or the like, which should however not be construed as a limitation in the disclosure. Besides, one of the first apparatus 110 and the second apparatus 120 may be capable of performing a function of a routing packet, e.g., a router, a gateway, a cable modem (CM), which should however not be construed as a limitation in the disclosure.

The first network 112 and the second network 122 may be cable networks, wireless networks, or Internet, which is not limited in the disclosure. For instance, one of the first network 112 and the second network 122 is a cable network, using a hybrid fiber-coaxial (HFC) as a transmission medium, and the other one is a cable network, using optical fiber as the transmission medium, an Internet, or a wireless local area network (WLAN).

In an embodiment, the first apparatus 110 is, for instance, a mobile apparatus; the second apparatus 120 is, for instance, a gateway; and the network bridge 130 is, for instance, a CM. The network bridge 130 is connected to the second apparatus 120 through HFC and is connected to the first apparatus 110 through a cable or in a wireless manner.

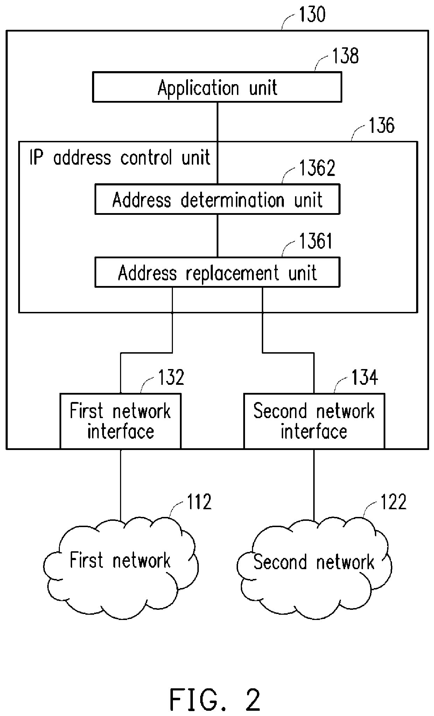

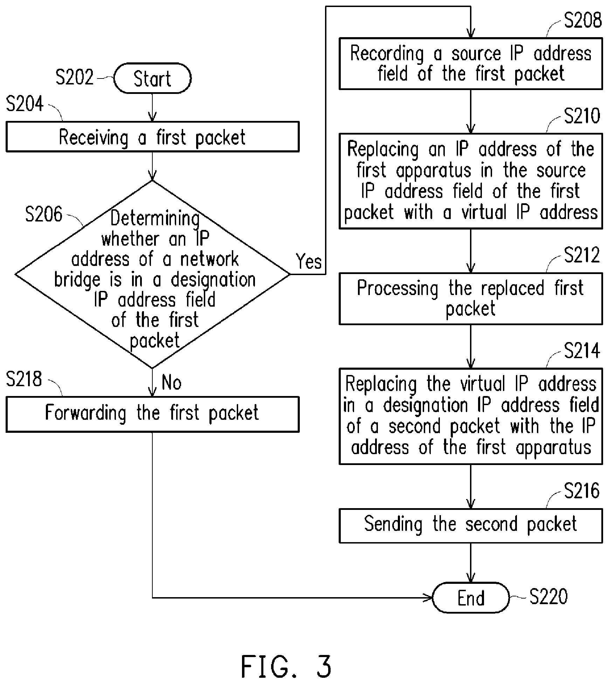

FIG. 2 is a schematic block view of a network bridge according to an embodiment of the disclosure. FIG. 3 is a flow chart of a network management method according to an embodiment of the disclosure. Next, with reference to FIG. 2 and FIG. 3 together with FIG. 1, the management method shown in FIG. 3 is applicable to the embodiments shown in FIG. 1 and FIG. 2, and the network bridge and the way to conduct the network management method provided in an embodiment of the disclosure are further elaborated hereinafter.

The network bridge 130 includes a first network interface 132, a second network interface 134, an IP address control unit 136, and an application unit 138. The application unit 138 is coupled to the IP address control unit 136, and the IP address control unit 136 is coupled to the application unit 138, the first network interface 132, and the second network interface 134. The IP address control unit 136 includes an address determination unit 1361 and an address replacement unit 1362. The network bridge 130 transmits data to the first apparatus 110 in the first network 112 and the second apparatus 120 in the second network 122 via the first network interface 132 and the second network interface 134, respectively.

The first network interface 132 and the second network interface 134 may be but not limited to cable or wireless network interface cards, for instance. The first network interface 132 and the second network interface 134 are connected to the first network 112 and the second network 122, respectively, so as to access the data packets in the first network 112 or the second network 122. The application unit 138 and the IP address control unit 136 are, for instance, central processing units (CPU), microprocessors, application specific integrated Circuits (ASIC), programmable logic devices (PLD), other apparatuses having computing capabilities, or a combination of the aforesaid apparatuses, which should not be construed as a limitation in the disclosure. The address determination unit 1361 and the address replacement unit 1362 may be implemented by software or hardware, e.g., in form of circuits. Alternatively, if the IP address control unit 136 is a processor, it could be implemented by the execution of an address determination command and an address replacement command. The application unit 138 is configured to execute an application program, so as to bridge the first network 112 and the second network 122. The application program is, for instance, a network bridge management system, a network bridge communication protocol, or another upper-level application software. The IP address control unit 136 is configured to receive or transmit the data packet through the first network interface 132 or the second network interface 134 and analyze a received frame, the destination IP address of the data packet, or a destination media access control (MAC) address of the data packet. According to the port state of the network bridge 130, the IP address control unit 136 determines whether to filter or forward the data packet.

First, in step S202, the first apparatus 110 sends the first packet to the network bridge 130; next, in step S204, the IP address control unit 136 receives through the first network interface 132 the first packet sent from the first apparatus 110. In step S206, the address determination unit 1361 of the IP address control unit 136 determines whether the IP address in the destination IP address field of the first packet is the IP address of the network bridge 130. If the address determination unit 1361 determines that the destination IP address in the first packet and the IP address of the network bridge 130 are the same, step S208 is performed; otherwise, step S218 is carried out.

In step S208, the IP address control unit 136 records the source IP address of the first packet and sets a client IP address of the network bridge 130 to the source IP address of the first packet. Particularly, the IP address control unit 136 not only records the IP address of the first apparatus 110 in the source IP address field of the first packet but also records an initial value of a destination MAC address field of the first packet and sets a remote MAC address of the network bridge 130 to the initial value of the destination MAC address field of the first packet. In other embodiments, it is noted that the IP address control unit 136 may omit the step of recording the destination MAC address of the first packet.

Next, in step S210, the address replacement unit 1362 replaces the IP address of the first apparatus 110 with a virtual IP address in the source IP address field of the first packet, wherein the virtual IP address serving as a replacement and the IP address of the network bridge 130 belong to the same domain. Besides, the address replacement unit 1362 can also set the destination MAC address field of the first packet to the MAC address of the network bridge 130.

After that, in step S212, after the source IP address and the destination MAC address of the first packet are already set as the virtual IP address and the MAC address having the same domain as the network bridge 130 does, the IP address control unit 136 sends the first packet to the application unit 138, and the application unit 138 receives the replaced first packet from the IP address control unit 136 and processes the replaced first packet. At this time, the source IP address of the first packet is already changed to the IP address having the same domain as the network bridge 130 does; therefore, direct communications with the network bridge 130 are possible, and the application unit 138 is able to perform operations according to the data in the first packet. As such, the first apparatus 110 provided in the present embodiment can manage the network bridge 130.

In step S214, the application unit 138 returns the second packet. The second packet is sent to the IP address control unit 136 first. Note that the destination IP address of the second packet sent from the application unit 138 is the virtual IP address in step S210. The application unit 138 considers the host sending the first packet and the network bridge 130 belong to the same domain; hence, the destination IP address of the second packet is the virtual IP address, and the destination MAC address of the second packet is the MAC address of the first apparatus 110, for instance. After the address replacement unit 1362 receives the second packet, the destination IP address field of the second packet is set to the IP address of the client, i.e., the virtual IP address is replaced with the IP address of the first apparatus 110 in the destination IP address field of the second packet. In an embodiment, the second apparatus 120 is capable of processing a communication protocol, such as a gateway (but not limited thereto). The address replacement unit 1362 could further change the source MAC address in the second packet from the MAC address of the network bridge 130 back to the MAC address of the second apparatus 120, i.e., the original destination MAC address in the first packet. In another embodiment, the IP address control unit 136 may not change the source MAC address in the second packet, so that the source MAC address in the second packet continues to be the MAC address of the network bridge 130. In brief, the source MAC address field of the second packet may contains the MAC address of the network bridge 130 or the MAC address of the second apparatus 120 in the second network 122.

Thereafter, in step S216, the IP address control unit 136 returns the second packet to the first apparatus 110 through the first network interface 132, and step S220 is then performed to complete the communication.

If the address determination unit 1361 determines that the destination IP address field of the first packet does not contain the IP address of the network bridge 130, but contains the IP address of the second apparatus 120, step S218 is performed, and the IP address control unit 136 forwards the first packet to the second apparatus 120 via the second network interface 134.

To sum up, in the network bridge and the network management method provided in the disclosure, the first apparatus belonging to a domain different from that of the network bridge sends the first packet to the network bridge, and the network bridge determines whether the destination IP address of the first packet is the same as the IP address of the network bridge. If these addresses are the same, the network bridge replaces the source IP address and the destination MAC address of the first packet with the virtual IP address and the MAC address having the same domain as the network bridge does, respectively. Thereby, the application unit of the network bridge may perform settings according to the replaced first packet, and the network bridge returns the second packet to the first apparatus, so as to complete the communication with the first apparatus. Since the network bridge may automatically change the source IP address and the destination MAC address of the first packet, the network bridge and the network management method provided in one or more embodiments of the disclosure contribute to the simplification of the user's operation or the process of managing the network bridge.

## Claims

1. A network bridge (130) comprising a first network interface (132), configured to receive a first packet sent from a first apparatus (110) connected to a first network (112), comprising:
an IP address control unit (136), comprising:
an address determination unit (1361), configured to determine whether an IP address of the network bridge (130) is in a destination IP address field of the first packet, wherein a domain of the first network (112) is different from a domain of the network bridge (130); and
an address replacement unit (1362), configured to replace an IP address of the first apparatus (110) in a source IP address field of the first packet with a virtual IP address to obtain a replaced first packet only when the IP address of the network bridge (130) is in the destination IP address field of the first packet, wherein the virtual IP address and the IP address of the network bridge (130) belong to the same domain; and
an application unit (138), configured to receive the replaced first packet from the IP address control unit (136) and execute an application program according to the data in the replaced first packet.

2. The network bridge (130) of claim 1, wherein the application unit (138) returns a second packet to the address replacement unit (1362), and when the address replacement unit (1362) receives the second packet, the address replacement unit (1362) replaces the virtual IP address in a destination IP address field of the second packet with the IP address of the first apparatus (110).

3. The network bridge (130) of claim 2, wherein a source media access control address field of the second packet contains a media access control address of the network bridge (130) or a media access control address of a second apparatus (120) in a second network (122).

4. The network bridge (130) of claim 3, further comprising:
a second network interface (134), configured to transmit data to the second apparatus (120) in the second network (122).

5. The network bridge (130) of claim 1 or 2, wherein the IP address control unit (136) is further configured to record the IP address of the first apparatus (110) in the source IP address field of the first packet before the IP address of the first apparatus (110) in the source IP address field of the first packet is replaced with the virtual IP address.

6. The network bridge (130) of claim 1 or 2 or 5, wherein when the address determination unit (1361) determines that the destination IP address field of the first packet does not contain the IP address of the network bridge (130), but contains an IP address of a second apparatus (120), the network bridge (130) forwards the first packet to the second apparatus (120), wherein the second apparatus (120) is in a second network (122).

7. The network bridge (130) of claim 1 or 2 or 5 or 6, wherein when the address determination unit (1361) determines the destination IP address field of the first packet contains the IP address of the network bridge (130), the address replacement unit (1362) further sets a destination media access control address field of the first packet to a media access control address of the network bridge (130).

8. The network bridge (130) of claim 7, wherein the IP address control unit (136) further records a value of the destination media access control address field of the first packet.

9. The network bridge (130) of claim 1 or 2 or 5 or 6 or 7, wherein the first apparatus (110) comprises a mobile apparatus, the second apparatus (120) comprises a gateway, the network bridge (130) comprises a cable modem, and the network bridge (130) is connected to the second apparatus (120) through a coaxial cable and is connected to the first apparatus (110) through a cable or in a wireless manner.

10. A management method of a network bridge (130) which receives a first packet sent from a first apparatus (110) connected to a first network (112), comprising:
determining whether an IP address of the network bridge (130) is in a destination IP address field of the first packet, wherein a domain of the first network (112) is different from a domain of the network bridge (130); and
only when the IP address of the network bridge (130) is in the destination IP address field of the first packet, replacing an IP address of the first apparatus (110) in a source IP address field of the first packet with a virtual IP address to obtain a replaced first packet and executing an application program according to the data in the replaced first packet, wherein the virtual IP address and the IP address of the network bridge (130) belong to the same domain.

11. The network management method of claim 10, when the destination IP address field of the first packet does not contain the IP address of the network bridge (130), but contains an IP address of a second apparatus (120), forwarding the first packet to the second apparatus (120), wherein the second apparatus (120) is in a second network (122).

12. The network management method of claim 10 or 11, the step of replacing the IP address of the first apparatus (110) with the virtual IP address when the IP address of the network bridge (130) is in the destination IP address field of the first packet further comprising:
setting a destination media access control field of the first packet to a media access control address of the network bridge (130).

13. The network management method of claim 12, the step of setting the destination media access control field of the first packet to the media access control address of the network bridge (130) comprising:
recording a value of the destination media access control address field of the first packet.

14. The network management method of claim 12, wherein the network bridge (130) returns a second packet to the first network (112) and replaces the virtual IP address in the destination IP address field of the second packet with the IP address of the first apparatus (110), wherein a source media access control address field of the second packet is filled with the media access control address of the network bridge (130) or a media access control address of a second apparatus (120) in a second network (122).

## Patentansprüche

1. Netzwerkbrücke (130), umfassend eine erste Netzwerkschnittstelle (132), die konfiguriert ist, um ein erstes Paket zu empfangen, gesendet von einer ersten Vorrichtung (110), verbunden mit einem ersten Netzwerk (112), umfassend:
eine IP-Adressensteuereinheit (136), umfassend:
eine Adressenbestimmungseinheit (1361), die konfiguriert ist, um zu bestimmen, ob sich eine IP-Adresse der Netzwerkbrücke (130) in einem Ziel-IP-Adressenfeld des ersten Pakets befindet, wobei sich eine Domäne des ersten Netzwerks (112) von einer Domäne der Netzwerkbrücke (130) unterscheidet; und
eine Adressenersatzeinheit (1362), die konfiguriert ist, um eine IP-Adresse der ersten Vorrichtung (110) in einem Quell-IP-Adressenfeld des ersten Pakets durch eine virtuelle IP-Adresse zu ersetzen, um ein ersetztes erstes Paket nur dann zu erhalten, wenn sich die IP-Adresse der Netzwerkbrücke (130) in dem Ziel-IP-Adressenfeld des ersten Pakets befindet, wobei die virtuelle IP-Adresse und die IP-Adresse der Netzwerkbrücke (130) zu derselben Domäne gehören; und
eine Anwendungseinheit (138), die konfiguriert ist, um das ersetzte erste Paket von der IP-Adressensteuereinheit (136) zu empfangen und ein Anwendungsprogramm entsprechend den Daten in dem ersetzten ersten Paket ausführt.

2. Netzwerkbrücke (130) nach Anspruch 1, wobei die Anwendungseinheit (138) ein zweites Paket an die Adressenersatzeinheit (1362) zurückgibt, und wenn die Adressenersatzeinheit (1362) das zweite Paket empfängt, ersetzt die Adressenersatzeinheit (1362) die virtuelle IP-Adresse in einem Ziel-IP-Adressenfeld des zweiten Pakets durch die IP-Adresse der ersten Vorrichtung (110).

3. Netzwerkbrücke (130) nach Anspruch 2, wobei ein Quell-Media-Access-Control-Adressenfeld des zweiten Pakets ein Media-Access-Control-Adresse der Netzwerkbrücke (130) oder eine Media-Access-Control-Adresse einer zweiten Vorrichtung (120) in einem zweiten Netzwerk (122) enthält.

4. Netzbrücke (130) nach Anspruch 3, ferner umfassend:
eine zweite Netzwerkschnittstelle (134), die konfiguriert ist, um Daten an die zweite Vorrichtung (120) in dem zweiten Netzwerk (122) zu übertragen.

5. Netzwerkbrücke (130) nach Anspruch 1 oder 2, wobei die IP-Adressensteuereinheit (136) ferner konfiguriert ist, um die IP-Adresse der ersten Vorrichtung (110) in dem Quell-IP-Adressenfeld des ersten Pakets aufzuzeichnen, bevor die IP-Adresse der ersten Vorrichtung (110) in dem Quell-IP-Adressenfeld des ersten Pakets durch die virtuelle IP-Adresse ersetzt wird.

6. Netzwerkbrücke (130) nach Anspruch 1 oder 2 oder 5, wobei, wenn die Adressenbestimmungseinheit (1361) bestimmt, dass das Ziel-IP-Adressenfeld des ersten Pakets nicht die IP-Adresse der Netzwerkbrücke (130) enthält, sondern eine IP-Adresse einer zweiten Vorrichtung (120) enthält, die Netzwerkbrücke (130) das erste Paket an die zweite Vorrichtung (120) weiterleitet, wobei sich die zweite Vorrichtung (120) in einem zweiten Netzwerk (122) befindet.

7. Netzwerkbrücke (130) des Anspruchs 1 oder 2 oder 5 oder 6, wobei, wenn die Adressenbestimmungseinheit (1361) das Ziel-IP-Adressenfeld des ersten Pakets bestimmt, die IP-Adresse der Netzwerkbrücke (130) enthält, die Adressenersatzeinheit (1362) ein Ziel-Media-Access-Control-Adressenfeld des ersten Pakets zu einer Media-Access-Control-Adresse der Netzwerkbrücke (130) setzt.

8. Netzwerkbrücke (130) nach Anspruch 7, wobei die IP-Adressensteuereinheit (136) ferner einen Wert des Ziel-Media-Access-Control-Adressenfeldes des ersten Pakets aufzeichnet.

9. Netzwerkbrücke (130) des Anspruchs 1 oder 2 oder 5 oder 6 oder 7, wobei die erste Vorrichtung (110) eine mobile Vorrichtung umfasst, die zweite Vorrichtung (120) ein Gateway umfasst, die Netzwerkbrücke (130) ein Kabelmodem umfasst und die Netzwerkbrücke (130) über ein Koaxialkabel mit der zweiten Vorrichtung (120) verbunden ist und über ein Kabel oder drahtlos mit der ersten Vorrichtung (110) verbunden ist.

10. Verwaltungsverfahren einer Netzwerkbrücke (130), die ein erstes Paket empfängt, das von einer ersten Vorrichtung (110) gesendet wird, verbunden mit einem ersten Netzwerk (112), umfasst:
Bestimmen, ob sich eine IP-Adresse der Netzwerkbrücke (130) in einem Ziel-IP-Adressenfeld des ersten Pakets befindet, wobei sich eine Domäne des ersten Netzwerks (112) von einer Domäne der Netzwerkbrücke (130) unterscheidet; und
nur wenn sich die IP-Adresse der Netzwerkbrücke (130) in dem Ziel-IP-Adressenfeld des ersten Pakets befindet, Ersetzen einer IP-Adresse der ersten Vorrichtung (110) in einem Quell-IP-Adressenfeld des ersten Pakets durch eine virtuelle IP-Adresse, um ein ersetztes erstes Paket zu erhalten, und Ausführen eines Anwendungsprogramms gemäß den Daten in dem ersetzten ersten Paket; wobei die virtuelle IP-Adresse und die IP-Adresse der Netzwerkbrücke (130) zu derselben Domäne gehören.

11. Netzwerkverwaltungsverfahren nach Anspruch 10, wenn das Ziel-IP-Adressenfeld des ersten Pakets nicht die IP-Adresse der Netzwerkbrücke (130), sondern eine IP-Adresse einer zweiten Vorrichtung (120) enthält, leitet das erste Paket an die zweite Vorrichtung (120) weiter, wobei sich die zweite Vorrichtung (120) in einem zweiten Netzwerk (122) befindet.

12. Netzwerkverwaltungsverfahren nach Anspruch 10 oder 11, wobei der Schritt zum Ersetzen der IP-Adresse der ersten Vorrichtung (110) durch die virtuelle IP-Adresse, wenn die IP-Adresse der Netzwerkbrücke (130) in dem Ziel-IP-Adressenfeld des ersten Pakets sich befindet, ferner umfasst:
Setzen eines Ziel-Media-Access-Control-Felds des ersten Pakets auf eine Media-Access-Control-Adresse der Netzwerkbrücke (130).

13. Netzwerkverwaltungsverfahren nach Anspruch 12, wobei der Schritt zum Setzen des Ziel-Media-Access-Control-Felds des ersten Pakets auf die Media-Access-Control-Adresse der Netzwerkbrücke (130), umfassend:
Aufzeichnen eines Werts des Ziel-Media-Access-Control-Adressenfeld des ersten Pakets.

14. Netzwerkverwaltungsverfahren nach Anspruch 12, wobei die Netzwerkbrücke (130) ein zweites Paket an das erste Netzwerk (112) zurückgibt und die virtuelle IP-Adresse im Ziel-IP-Adressenfeld des zweiten Pakets durch die IP-Adresse der ersten Vorrichtung (110) ersetzt, wobei ein Quell-Media-Access-Control-Adressenfeld des zweiten Pakets mit der Media-Access-Control-Adresse der Netzwerkbrücke (130) oder einer Medien-Access-Control-Adresse einer zweiten Vorrichtung (120) in einem zweiten Netzwerk (122) gefüllt ist.

## Revendications

1. Pont de réseau (130) comprenant une première interface de réseau (132), configuré pour recevoir un premier paquet envoyé depuis un premier appareil (110) connecté à un premier réseau (112), comprenant :
une unité de commande d'adresse IP (136), comprenant :
une unité de détermination d'adresse (1361), configurée pour déterminer si une adresse IP du pont de réseau (130) se trouve dans un champ d'adresse IP de destination du premier paquet, dans lequel un domaine du premier réseau (112) est différent d'un domaine du pont de réseau (130); et
une unité de remplacement d'adresse (1362), configurée pour remplacer une adresse IP du premier appareil (110) dans un champ d'adresse IP source du premier paquet par une adresse IP virtuelle pour obtenir un premier paquet remplacé uniquement lorsque l'adresse IP du pont de réseau (130) est dans le champ d'adresse IP de destination du premier paquet,
dans lequel l'adresse IP virtuelle et l'adresse IP du pont de réseau (130) appartiennent au même domaine ; et
une unité d'application (138), configurée pour recevoir le premier paquet remplacé de l'unité de commande d'adresse IP (136) et exécuter un programme d'application selon les données dans le premier paquet remplacé.

2. Pont de réseau (130) selon la revendication 1, dans lequel l'unité d'application (138) renvoie un deuxième paquet à l'unité de remplacement d'adresse (1362), et lorsque l'unité de remplacement d'adresse (1362) reçoit le deuxième paquet, l'unité de remplacement d'adresse l'unité (1362) remplace l'adresse IP virtuelle dans un champ d'adresse IP de destination du deuxième paquet par l'adresse IP du premier appareil (110) .

3. Pont de réseau (130) selon la revendication 2, dans lequel un champ d'adresse de commande d'accès au média source du deuxième paquet contient une adresse de commande d'accès au média du pont de réseau (130) ou une adresse de commande d'accès au média d'un deuxième appareil (120) dans un deuxième réseau (122).

4. Pont de réseau (130) selon la revendication 3, comprenant en outre :
une deuxième interface de réseau (134), configurée pour transmettre des données au deuxième appareil (120) dans le deuxième réseau (122).

5. Pont de réseau (130) selon la revendication 1 ou 2, dans lequel l'unité de commande d'adresse IP (136) est en outre configurée pour enregistrer l'adresse IP du premier appareil (110) dans le champ d'adresse IP source du premier paquet avant que l'adresse IP du premier appareil (110) dans le champ d'adresse IP source du premier paquet soit remplacée par l'adresse IP virtuelle.

6. Pont de réseau (130) selon la revendication 1 ou 2 ou 5, dans lequel lorsque l'unité de détermination d'adresse (1361) détermine que le champ d'adresse IP de destination du premier paquet ne contient pas l'adresse IP du pont de réseau (130), mais contient une adresse IP d'un deuxième appareil (120), le pont de réseau (130) transfère le premier paquet au deuxième appareil (120), dans lequel le deuxième appareil (120) est dans un deuxième réseau (122).

7. Pont de réseau (130) selon la revendication 1 ou 2 ou 5 ou 6, dans lequel lorsque l'unité de détermination d'adresse (1361) détermine que le champ d'adresse IP de destination du premier paquet contient l'adresse IP du pont de réseau (130), l'unité de remplacement d'adresse (1362) définit en outre un champ d'adresse de commande d'accès au média de destination du premier paquet sur une adresse de commande d'accès au média du pont de réseau (130).

8. Pont de réseau (130) selon la revendication 7, dans lequel l'unité de commande d'adresse IP (136) enregistre en outre une valeur du champ d'adresse de commande d'accès au média de destination du premier paquet.

9. Pont de réseau (130) selon la revendication 1 ou 2 ou 5 ou 6 ou 7, dans lequel le premier appareil (110) comprend un appareil mobile, le deuxième appareil (120) comprend une passerelle, le pont de réseau (130) comprend un modem câblé, et le pont de réseau (130) est connecté au deuxième appareil (120) par un câble coaxial et est connecté au premier appareil (110) par l'intermédiaire d'un câble ou d'une manière sans fil.

10. Procédé de gestion d'un pont de réseau (130) qui reçoit un premier paquet émis depuis un premier équipement (110) connecté à un premier réseau (112), comprenant de :
déterminer si une adresse IP du pont de réseau (130) se trouve dans un champ d'adresse IP de destination du premier paquet, dans lequel un domaine du premier réseau (112) est différent d'un domaine du pont de réseau (130) ; et
uniquement lorsque l'adresse IP du pont de réseau (130) se trouve dans le champ d'adresse IP de destination du premier paquet, remplacer une adresse IP du premier appareil (110) dans un champ d'adresse IP source du premier paquet par une adresse virtuelle IP pour obtenir un premier paquet remplacé et exécuter un programme d'application selon les données dans le premier paquet remplacé, l'adresse IP virtuelle et l'adresse IP du pont de réseau (130) appartenant au même domaine.

11. Procédé de gestion de réseau selon la revendication 10, lorsque le champ d'adresse IP de destination du premier paquet ne contient pas l'adresse IP du pont de réseau (130), mais contient une adresse IP d'un deuxième appareil (120), le transfert du premier paquet au deuxième appareil (120), dans lequel le deuxième appareil (120) se trouve dans un deuxième réseau (122).

12. Procédé de gestion de réseau selon la revendication 10 ou 11, l'étape consistant à remplacer l'adresse IP du premier équipement (110) par l'adresse IP virtuelle lorsque l'adresse IP du pont de réseau (130) se trouve dans le champ d'adresse IP de destination du premier paquet comprenant en outre de :
régler un champ de commande d'accès au média de destination du premier paquet sur une adresse de commande d'accès au média du pont de réseau (130).

13. Procédé de gestion de réseau selon la revendication 12, l'étape de réglage du champ de commande d'accès au média de destination du premier paquet à l'adresse de commande d'accès au média du pont de réseau (130) comprenant de :
enregistrer une valeur du champ d'adresse de commande d'accès au média de destination du premier paquet.

14. Procédé de gestion de réseau selon la revendication 12, dans lequel le pont de réseau (130) renvoie un deuxième paquet au premier réseau (112) et remplace l'adresse IP virtuelle dans le champ d'adresse IP de destination du deuxième paquet par l'adresse IP du premier appareil (110), dans lequel un champ d'adresse de commande d'accès au média source du deuxième paquet est rempli avec l'adresse de commande d'accès au média du pont de réseau (130) ou une adresse de commande d'accès au média d'un deuxième appareil (120) dans un deuxième réseau (122).
